# EUROPEAN PATENT APPLICATION

(11) **EP 4 620 901 A1**
(43) Date of publication of application: **24.09.2025**
(21) Application number: 24305411.1
(22) Date of filing: 19.03.2024
(51) Int. Cl.: C01B 3/00, C01B 3/22

(54) **METHOD FOR HANDLING DIHYDROGEN BY MEANS OF A LIQUID ORGANIC HYDROGEN CARRIER AND ASSOCIATED INDUSTRIAL PLANT**

(71) Applicant: Technip Energies France, 92741 Nanterre Cedex (FR)
(72) Inventor: Salazar Rodriguez, Mariam, BRAINTREE, 02184 (US); Evitt, Steven D., SOMERVILLE, 02144 (US)
(74) Representative: McWilliams, David John

(57) **Abstract**

The invention relates to a method (100) for handling dihydrogen, comprising : a step of providing a first organic compound (104) ; then a hydrogenation step (102), comprising submitting the first organic compound to a hydrogenation reaction in the presence of dihydrogen, so as to obtain a second organic compound (106) ; then a step (110) of conditioning the second organic compound for storage and/or transport; and storing and/or transporting the conditioned second organic compound ; then a dehydrogenation step (108), comprising submitting the second organic compound to a dehydrogenation reaction, so as to obtain dihydrogen and the first organic compound.

The first organic compound is a lactone and the second organic compound is a terminal diol.

## Description

The present invention relates to a method for handling dihydrogen, comprising : a step of providing a first organic compound; then a hydrogenation step, comprising submitting the first organic compound to a hydrogenation reaction in the presence of dihydrogen, so as to obtain a second organic compound; then a step of conditioning the second organic compound for storage and/or transport; and storing and/or transporting the conditioned second organic compound ; then a dehydrogenation step, comprising submitting the second organic compound to a dehydrogenation reaction, so as to obtain dihydrogen and the first organic compound.

As a hazardous gas, dihydrogen (H₂) needs specific storage and transport conditions. It is known to us chemical compounds as hydrogen carriers. Such compounds are either liquid-state or solid-state materials, having the ability to trap dihydrogen for storage or transport, and then to release it in gaseous form, when needed.

Liquid organic hydrogen carriers (LOHC) allow the storage or transport of a hydrogen carrier in a liquid phase. More precisely, a chemical compound is submitted to a hydrogenation reaction, wherein the compound bonds with hydrogen, and then to a reverse dehydrogenation reaction, wherein dihydrogen is released. The liquid form facilitates the hydrogenation/dehydrogenation reactions.

Documents US8758722, US10450194 and WO2021084046 describe methods for using organic compounds as LOHC, through hydrogenation/dehydrogenation reactions.

However, some of said methods involve hazardous and/or toxic organic compounds, as well as expensive catalysts for the hydrogenation/dehydrogenation reactions. Moreover, some of said methods imply high energy costs for the hydrogenation and/or dehydrogenation reactions, which diminishes the economic interest of the method.

The aim of the invention is to provide a cost-effective method for handling dihydrogen by means of a liquid organic hydrogen carrier, involving safe organic compounds.

For this purpose, the invention relates to a method of the aforementioned type, wherein the first organic compound is a lactone and in that the second organic compound is a terminal diol.

According to preferred embodiments, the method may include one or more of the following features, considered alone or in any technically possible combination:
- the lactone is of general formula (I) : 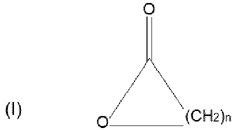
   and the terminal diol is of general formula HO-(CH₂)ₙ₊₁-OH,
   with n being a natural number comprised between 2 and 5 ;
- the natural number n is selected among 2, 3, 4 and 5, the terminal diol being preferably the 1,4-butanediol ;
- the dehydrogenation step is carried out in gaseous phase and the resulting lactone condenses during said dehydrogenation step ;
- the dehydrogenation step is carried out in the presence of a Cu-based catalyst ;
- the hydrogenation step is carried out in the presence of a Cu-based catalyst ;
- a fraction of the second organic compound, obtained by the hydrogenation step, is reintroduced in a reactor receiving said hydrogenation step ;
- the method further comprises, after the dehydrogenation step, a step of conditioning the first organic compound for storage and/or transport ; and storing and/or transporting the conditioned first organic compound.

The invention relates to an industrial plant configured for carrying out a method for handling dihydrogen as described above, the industrial plant comprising a hydrogenation unit and a dehydrogenation unit, the hydrogenation unit comprising : a hydrogenation reactor adapted for carrying out the hydrogenation step ; and means for conditioning the second organic compound for storage and/or transport ; and the dehydrogenation unit comprising a dehydrogenation reactor adapted for carrying out the dehydrogenation step.

According to preferred embodiments, the industrial plant may include one or more of the following features, considered alone or in any technically possible combination:
- the hydrogenation unit further comprises a first separator downstream of the hydrogenation reactor, said first separator being preferably a liquid/gas separator;
- the hydrogenation unit further comprises a first treatment device downstream of the hydrogenation reactor, said first treatment device being preferably a liquid/liquid separator;
- the hydrogenation unit further comprises a second treatment device upstream of the hydrogenation reactor, said second treatment device being configured for removing acidic impurities from a stream introduced in the hydrogenation reactor;
- the hydrogenation unit further comprises means for transferring the fraction of the second organic compound, obtained by the hydrogenation step, from the hydrogenation reactor to the second treatment device ;
- the dehydrogenation unit further comprises a second separator downstream of the dehydrogenation reactor, said second separator being preferably a liquid/gas separator;
- the dehydrogenation unit further comprises means for conditioning the first organic compound for storage and/or transport.

The invention will be easier to understand in view of the following description, provided solely as an example, and with reference to the appended drawings, wherein :
- Figure 1 is a schematic view of an industrial plant according to an embodiment of the invention ; and
- Figure 2 is a flowchart of a method for handling dihydrogen according to an embodiment of the invention.

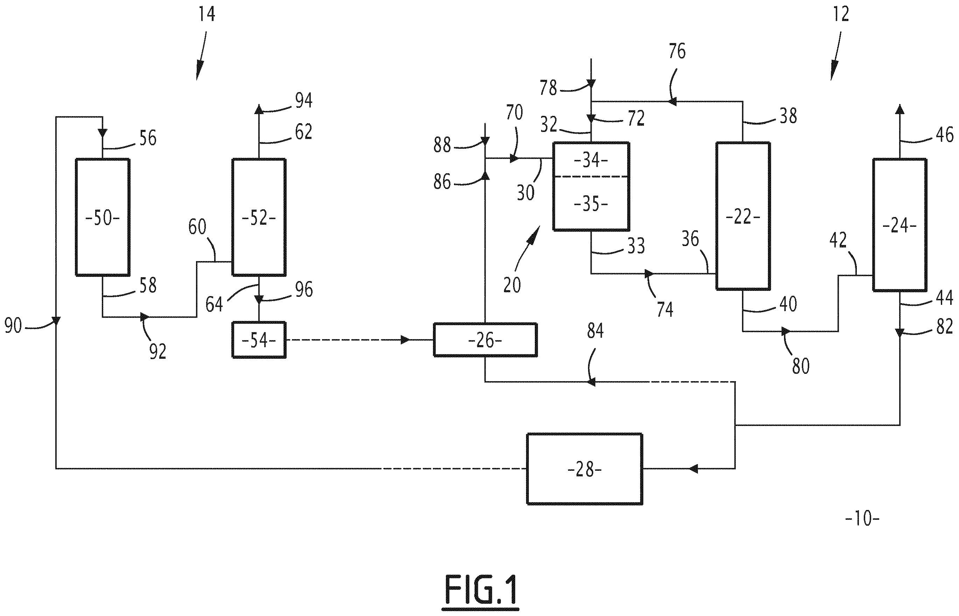

Figure 1 shows an industrial plant 10 according to an embodiment of the invention. The industrial plant 10 comprises a hydrogenation unit 12 and a dehydrogenation unit 14. In an embodiment, the hydrogenation unit 12 and dehydrogenation unit 14 are distant from each other. More specifically, in an embodiment, the hydrogenation unit 12 and dehydrogenation unit 14 are situated on different industrial sites.

The hydrogenation unit 12 comprises a hydrogenation reactor 20 and preferably a first separator 22. In the embodiment of Figure 1, the hydrogenation unit 12 also comprises: a first 24 and a second 26 treatment devices ; and a first container 28.

The hydrogenation reactor 20 comprises a liquid inlet 30, a gas inlet 32 and an outlet 33. In the embodiment of Figure 1, the hydrogenation reactor 20 comprises a mixing section 34 and a reaction section 35, in communication with each other. The liquid inlet 30 and gas inlet 32 open on the mixing section 34. The outlet 33 opens on the reaction section 35.

Preferably, the reaction section 35 is configured for carrying out a reaction in adiabatic conditions.

In another embodiment (not shown), the hydrogenation reactor 20 does not include a mixing section and the hydrogenation unit 12 is configured so as to carry out a mixture of reactants upstream of the hydrogenation reactor. In another embodiment (not shown), the hydrogenation reactor 20 is a continuous reactor in which gas and liquid reactants may enter into contact with a catalyst.

In the embodiment of Figure 1, the first separator 22 is a gas/liquid separator and comprises an inlet 36, a gas outlet 38 and a liquid outlet 40.

In the embodiment of Figure 1, the first treatment device 24 is a liquid/liquid separator. The first treatment device 24 comprises an inlet 42 and a first 44 and a second 46 outlets.

The second treatment device 26 and the first container 28 will be described later.

In the embodiment of Figure 1, the outlet 33 of the hydrogenation reactor 20 is connected to the inlet 36 of the first separator 22 ; the gas outlet 38 of the first separator 22 is connected to the gas inlet 32 of the hydrogenation reactor 20 ; and the liquid outlet 40 of the first separator 22 is connected to the inlet 42 of the first treatment device 24.

The dehydrogenation unit 14 comprises a dehydrogenation reactor 50 and preferably a second separator 52. In the embodiment of Figure 1, the dehydrogenation unit 14 also comprises a second container 54.

The dehydrogenation reactor 50 comprises an inlet 56 and an outlet 58. In the embodiment of Figure 1, the second separator 52 is a gas/liquid separator and comprises an inlet 60, a gas outlet 62 and a liquid outlet 64.

In the embodiment of Figure 1, the outlet 58 of the dehydrogenation reactor 50 is connected to the inlet 60 of the second separator 52. Moreover, the liquid outlet 64 of the second separator 52 is connected to the second container 54.

Preferably, the dehydrogenation reactor 50 is configured for carrying out a reaction in adiabatic conditions. More preferably, the dehydrogenation reactor 50 is configured for carrying out a reaction in a gas phase.

The industrial plant 10 is designed for carrying out a method for handling dihydrogen. More precisely, the method involves trapping dihydrogen into a stable form, for transport and storage, and releasing said dihydrogen in gaseous form, for further use. The method uses a liquid organic hydrogen carrier (LOHC).

In the present invention, the dehydrogenated LOHC is a lactone. By a « lactone » is meant a cyclic carboxylic ester including a 1-oxacycloalkan-2-one structure (-C(=O)-O-).

In the present invention, the corresponding hydrogenated LOHC is a terminal diol. By a « terminal diol » is meant a linear chain including two terminal carbons, each of said carbons bearing a -OH group.

Preferably, the lactone is of general formula (I) below : 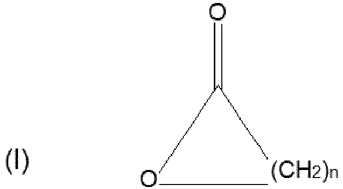
and the terminal diol is of general formula HO-(CH₂)ₙ₊₁-OH,
with n being a natural number comprised between 2 and 5.

More preferably, the natural number n is selected among 2, 3, 4 and 5. In other terms, the lactone is selected among the β-propiolactone, the γ-butyrolactone, the δ-valerolactone and the ε-caprolactone.

Even more preferably, the lactone is the γ-butyrolactone and the corresponding terminal diol is the 1 ,4-butanediol (with n = 3).

Preferably, the hydrogenation reaction is carried out in the presence of a supported catalyst. More preferably, the catalyst of the hydrogenation reaction includes an active metal, with or without additives.

In a preferred embodiment, the catalyst composition is selected among nickel, copper, platinum, palladium, rhodium, iridium, ruthenium, zinc, magnesium, potassium, yttrium, cerium and perovskite or a combination of them. The active metals may be in a reduced form or an oxide form, such as NiO or CuO. In a more preferred embodiment, the catalyst of the hydrogenation reaction includes copper and is preferably selected among copper and a copper oxide.

In a preferred embodiment, the support of the supported catalyst of the hydrogenation reaction is selected among alumina, silica, carbon-based materials and silica-alumina.

The hydrogenation reaction is exothermic. Moreover, the reaction equilibrium is affected by high temperatures. As described below, the conditions of the hydrogenation reaction are preferably controlled so as to maintain the reaction temperature under a determined threshold. Preferably, the hydrogenation reaction is carried out under adiabatic conditions.

Preferably, the dehydrogenation reaction is carried out in the presence of a supported catalyst. More preferably, the catalyst of the dehydrogenation reaction includes an active metal, with or without additives.

In a preferred embodiment, the catalyst composition is selected among nickel, copper, platinum, palladium, rhodium, iridium, ruthenium, zinc, magnesium, potassium, yttrium, cerium and perovskite or a combination of them. The active metals may be in a reduced form or an oxide form, such as NiO, CuO.

In a more preferred embodiment, the catalyst of the dehydrogenation reaction includes copper and is preferably selected among copper and a copper oxide.

In a preferred embodiment, the support of the supported catalyst of the dehydrogenation reaction is selected among alumina, silica, carbon-based materials and silica-alumina.

The dehydrogenation reaction is endothermic. As described below, the conditions of the dehydrogenation reaction are preferably controlled so that said dehydrogenation reaction occurs in a gaseous phase and that the dehydrogenated product condenses under said conditions. Preferably, the dehydrogenation reaction is carried out under adiabatic conditions.

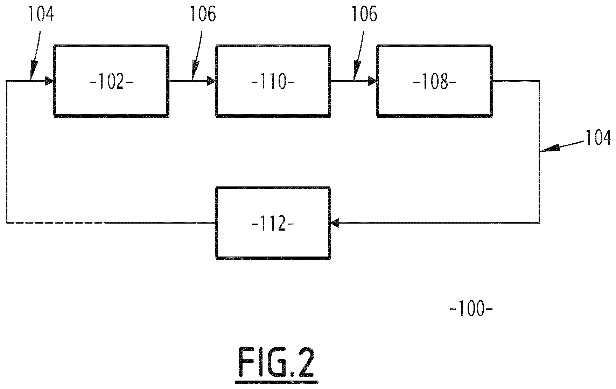

A method 100 for implementing the industrial plant 10 according to the invention is schematized on Figure 2. The method 100 includes at least : a hydrogenation step 102, comprising submitting a first organic compound 104 to a hydrogenation reaction in the presence of dihydrogen, so as to obtain a second organic compound 106 ; and a dehydrogenation step 108, comprising submitting the second organic compound 106 to a dehydrogenation reaction, so as to obtain dihydrogen and the first organic compound 104. As detailed above, in the present invention, the first organic compound is a lactone and the second organic compound is a terminal diol.

Preferably, between the hydrogenation step 102 and the dehydrogenation step 108, the method 100 comprises a step 110 of : conditioning the second organic compound 106 for storage and/or transport; and storing and/or transporting the conditioned second organic compound.

Preferably, the method 100 is a hydrogenation/dehydrogenation cycle, wherein the first organic compound 104 issued from the dehydrogenation step 108 is reintroduced in the hydrogenation step 102.

Preferably, the method 100 also comprises, after the dehydrogenation step 108, a step 112 of : conditioning the first organic compound 104 for storage and/or transport; and storing and/or transporting the conditioned first organic compound 104.

The industrial plant 10 may therefore be implemented in a hydrogenation/dehydrogenation cycle, using the first 104 and second 106 organic compounds as LOHC.

A method for implementing the industrial plant 10 according to an embodiment of the invention, illustrated on Figure 1, will now be described.

The method comprises a phase of implementation of the hydrogenation unit 12 and a phase of implementation of the dehydrogenation unit 14.

The phase of implementation of the hydrogenation unit 12 will now be described.

A liquid first stream 70 and a gas second stream 72 are introduced in the mixing section 34 of the hydrogenation reactor 20, respectively by the liquid inlet 30 and by the gas inlet 32. The first stream 70 and second stream 72 contain respectively the first organic compound and dihydrogen. As detailed above, the first organic compound is a lactone, preferably the γ-butyrolactone.

The dihydrogen is provided in large excess relative to the first organic compound. Preferably, the molar ratio H₂/first organic compound of the resulting mixture, in the mixing section 34, is over fifty.

The resulting mixture is transferred in the reaction section 35, under adiabatic conditions and in the presence of a supported catalyst. The hydrogenation step 102 of Figure 2 is then carried out.

Preferably, the temperature and pressure of the mixture entering the reaction section 35 are maintained respectively within a range 120°C-160°C and over 700 psi (48 bar).

In the other embodiment (not shown) wherein the hydrogenation reactor 20 does not include a mixing section, the liquid first stream 70 and the gas second stream 72 are mixed and heated upstream of the hydrogenation reactor.

After the hydrogenation reaction, a third stream 74 is recovered at the outlet 33 of the hydrogenation reactor 20.

Preferably, the reaction conditions in the reaction section 35 are configured so that the temperature of the third stream 74 at the outlet 33 is maintained within a range 140°C-160°C. For example, the dilution of the first organic compound in dihydrogen, before contact with the hydrogenation catalyst, contributes to regulate the heating due to the exothermic hydrogenation reaction. As detailed below, it is also possible to maintain at a low level the concentration of first organic compound in the liquid first stream 70, so as to regulate the heating.

The third stream 74, containing a gas/liquid mixture, is directed to the inlet 36 of the first separator 22. A gaseous fourth stream 76, mainly composed of residual dihydrogen, is recovered at the gas outlet 38. The fourth stream 76 is preferably compressed and directed to the gas inlet 32 of the hydrogenation reactor 20, for recycling. To this purpose, the fourth stream 76 is preferably mixed with a stream 78 of fresh dihydrogen, so as to form the second stream 72.

A liquid fifth stream 80 is recovered at the liquid outlet 40 and directed to the inlet 42 of the first treatment device 24. Preferably, the first treatment device 24 is able to separate the fifth stream 80 into a first and a second liquid phases. The first liquid phase mainly comprises the second organic compound and possibly a fraction of residual first organic compound. As detailed above, the second organic compound is a terminal diol, preferably the 1,4-butanediol.

The second liquid phase contains hydrogenation by-products. Usually, the second liquid phase is lighter than the first liquid phase.

The first liquid phase is recovered at the first outlet 44 of the first treatment device 24, so as to form a liquid sixth stream 82. The second liquid phase is evacuated at the second outlet 46 of the first treatment device 24.

The hydrogenation reaction usually occurs at high yields, therefore the sixth stream 82 is mainly composed of the second organic compound, with possibly a small ratio of residual first organic compound.

According to an embodiment, the sixth stream 82 is directed to the first container 28, for storage and/or transport. The step 110 of Figure 2 is thus carried out.

The first and second organic compounds are selected for being safe and non-hazardous compounds to be stored and/or transported in a liquid state. As a consequence, the first and second organic compounds are advantageously used as LOHC.

According to another embodiment, a fraction 84 of the sixth stream 82 is recycled to the hydrogenation reactor 20. More precisely, said fraction 84 is directed to the second treatment device 26.

The second treatment device 26 is designed for removing any contaminant susceptible to degrade the hydrogenation catalyst. For example, the second treatment device 26 is designed for removing acidic impurities.

A liquid seventh stream 86 is recovered at an outlet of the second treatment device 26. According to a first embodiment, the seventh stream is mixed with a stream 88 of fresh first organic compound, so as to form the liquid first stream 70. According to a second embodiment, a supply of the first organic compound is added to the second treatment device 26 upstream of the seventh stream 86, as detailed later.

Preferably, the recycling of a fraction of the hydrogenation product allows the maintenance at a low level of the concentration of first organic compound in the liquid first stream 70. Due to such a dilution of the first organic compound in a proportion of second organic compound, the rise of temperature in the reaction section 35 of the hydrogenation reactor 20 is controlled.

The phase of implementation of the dehydrogenation unit 14 will now be described.

A liquid eighth stream 90, containing the second organic compound, is introduced in the dehydrogenation reactor 50 by the inlet 56. In an embodiment, the second organic compound is taken from the first container 28 described above.

The dehydrogenation step 108 of Figure 2 is then carried out, preferably under adiabatic conditions. Preferably, the reaction conditions in the dehydrogenation reactor 50 are configured so that the dehydrogenation reaction is carried out in gaseous phase and that the resulting first organic compound condenses during said dehydrogenation reaction.

More preferably, the temperature and pressure of the eighth stream 90 at the inlet 56 are maintained respectively within a 235°C-280°C range and below 3 psig (1,22 bar). The applicant theorized that advantageous reaction conditions are such that the inlet temperature is maintained slightly over the dew point of the second organic compound.

The condensation removes the first organic compound from the gas phase, shifting the reaction equilibrium in favor of dehydrogenation. Moreover, the exothermic condensation supplies heat for the endothermic dehydrogenation reaction. The system is therefore maintained at a temperature suitable for the dehydrogenation reaction.

A ninth stream 92 is recovered at the outlet of the dehydrogenation reactor 50. The ninth stream 92 is cooled with cooling water and then introduced in the second separator 52.

A gas tenth stream 94 is recovered at the gas outlet 62. The tenth stream 94 is mainly composed of released dihydrogen. Said dihydrogen may be used as such, or previously submitted to another treatment step.

A liquid eleventh stream 96 is recovered at the liquid outlet 64 and directed to the second container 54. The eleventh stream 96 is mainly composed of first organic compound.

In an embodiment, the first organic compound in the second container 54 is stored before further use or transported. The step 112 of Figure 2 is thus carried out. As mentioned above, the transportation or storage of the first organic compound is safe and non-hazardous.

In an embodiment, the first organic compound in the second container 54 is brought to the hydrogenation unit 12 of the industrial plant 10 for re-use in the hydrogenation/dehydrogenation cycle. For example, the first organic compound is transferred from the second container 54 to the second treatment device 26 for a pretreatment before hydrogenation, as detailed above. In this manner, the seventh stream 86 at the outlet of the second treatment device 26 is enriched with first organic compound before being introduced in the hydrogenation reactor 20.

The method according to the invention significantly reduces energy consumption of the dehydrogenation reaction, in comparison with the prior art of methods involving LOHC. Indeed, in addition with a lower reaction temperature, said temperature is maintained at a sufficient level by the condensation of the dehydrogenated product.

The first and second organic compounds according to the invention are hardly flammable, chemically stable and of low toxicity. Therefore, said compounds are easier to store and transport than other LOHC used in the prior art.

The catalysts used in the hydrogenation and dehydrogenation reactions are preferably Cu-based catalysts, which are less expensive than noble metal catalysts necessary for some of the prior art of methods involving LOHC.

The hydrogenation and dehydrogenation reactions according to the invention have high conversion rates and selectivity, which saves energy in the purification steps.

### Experimental

A pilot plant corresponding to the industrial plant 10 described above was designed and constructed. The hydrogenation reactor 20 and dehydrogenation reactor 50 were designed for reactions in continuous mode with a fixed catalyst bed.

The reactors could be operated up-flow or down-flow. This configuration facilitated conducting reaction in liquid and vapor phases as well as accommodating a wetting procedure necessary for a trickle bed operation. The pilot plant had a sampling system that allowed continuous sample filling by displacement of liquid in the sample port. The plant was designed for a maximum operating pressure of 1000 psi.

Hydrogenation and dehydrogenation reactions were performed using 50 gr of a commercially available copper supported in alumina or silica. The catalyst was activated by a first drying with nitrogen at high flow rate (100 cc/min) while was heating to 280 °C (1°C/min) overnight. Oxygen levels were targeted to be less than 1 mol%. Once the catalyst drying was completed, hydrogen was introduced by changing the hydrogen concentration from 0 to 100% passing through 50/50 molar H₂/N₂. The gas flow was maintained between 500-450 ml/min and pressure at 17 psi. After flowing with hydrogen for 4 hours, the reactor was cooled down to room temperature in the presence of H₂ (50 ml/min). Once the catalyst is activated, experimental data was obtained by setting the specified operating conditions.

Qualitative and quantitative analyses were carried out using chromatography. Three different detectors were used to identify components in the samples: Flame ionization detector (FID), Thermal conductivity detector (TCD) and mass spectrometry (MS). The peaks identification was achieved by determining retention times of pure components and by using the library search available in GC-MS. Quantitative analysis was done by obtaining calibration curves for each main detected component. The calibration curves allowed to establish the ratio between the GC-response (area) vs. known concentrations of prepared solutions.

### Example 1 - Hydrogenation reaction

Hydrogenation of gamma-butyrolactone (GBL) was carried out so as to obtain 1,4-butanediol as a hydrogen carrier.

To perform the hydrogenation reaction, 50 gr of commercially available catalyst composed of CuO, ZnO and Al₂O₃ was loaded in a trickle bed reactor. The catalyst bed was previously wetted after the catalyst activation as described in the previous section. To achieve the catalyst wetting, GBL was pumped up-flow at 100 ml/h and then at 500 ml/h at room temperature while the hydrogen flow was maintained. Hydrogen was turned off when GBL achieved a high flow. The excess of liquid was subsequently drained until the residual hold up. After the catalyst wetting, the GBL-co-current flow through the catalyst bed was established while the reactor was pressurized with hydrogen at the target pressure. Once the pressure reached target, the hydrogen flowrate was adjusted to the required hydrogen/GBL ratio and GBL feed was set at the defined flow rate. The temperature was then raised to reaction temperature.

Several samples were collected and analysed during reaction. Table 1 below displays the operating conditions and product composition during hydrogenation reaction.The data shown in the Table 1 is the average of several chemical analyses at steady state conditions.

**Table 1**

| | **1** | **2** | **3** | **4** | **5** | **6** | **7** |
|---|---|---|---|---|---|---|---|
| H_{2/}GBL | 4 | 4 | 2.5 | 50 | 50 | 16.5 | 4 |
| %wtGBL | 100 | 100 | 100 | 15 | 15 | 15 | 15 |
| Inlet T. | 225 | 198 | 160 | 128 | 128 | 136 | 142 |
| Pressure | 730 | 730 | 730 | 750 | 730 | 730 | 730 |
| Lights | 0.17 | 0.01 | 0.69 | 0.01 | 0 | 0.02 | 0.03 |
| THF | 3.61 | 5.08 | 1.57 | 0.84 | 0.96 | 1.65 | 2.12 |
| 1-BuOH | 2.11 | 0.76 | 0.45 | 0.00 | 0 | 0 | 0 |
| GBL | 32.9 | 5.73 | 5.59 | 2.12 | 2.65 | 2.78 | 2.01 |
| BDO | 61.2 | 88.4 | 91.7 | 97.0 | 96.4 | 95.55 | 95.69 |

| | | | | | | | |
|---|---|---|---|---|---|---|---|
| THF: Tetrahydrofuran ; 1-BuOH: 1-Butanol ; GBL: gamma-butyrolactone ; BDO: 1,4-Butanediol. | | | | | | | |

The high exotherm of the hydrogenation reaction is advantageously controlled, not only for safety reasons but also because the hydrogenation equilibrium is adversely affected at high temperatures. The experiments were designed to lower reaction temperature while achieving a compromise between kinetics and equilibrium. Simulated data indicates that the reaction exotherm leads to a ΔT 150 °C when inlet temperate is between 150-175 °C and undiluted feedstock is used. The feedstock dilution with both the reactant (H₂) and product (BDO) were optimized via experimentation and simulation.

The data above indicates high conversions by diluting GBL feedstock with BDO at a concentration below 20 wt% and recirculating hydrogen to achieve dilutions over H₂/GBL molar ratio of greater than 50. Higher pressure favours the formation of BDO resulting in an increase of GBL conversion. The inlet temperature is desired to be maintained over 120 °C to reach a compromise between a reaction that is thermodynamically favoured at low temperature but is limited by slow kinetics at lower temperatures.

### Example 2 - Dehydrogenation reaction

The dehydrogenation reaction was carried out by feeding BDO which releases hydrogen during its conversion to GBL. To perform the dehydrogenation reaction, 50 gr of commercially available catalyst composed of CuO and SiO₂ was loaded in a continuous mode reactor. The catalyst was initially activated by drying followed by a reduction process as described in the experimental section. Once the system achieved the reaction temperature, the feedstock injection was started with a nitrogen flow while pressure is maintained as low as 17 psig. The inert gas flow was cut off as soon as the reaction started as indicated by a temperature drop inside the reactor.

Several samples were collected and analysed during reaction. Table 2 below displays the operating conditions and product composition during dehydrogenation reaction. The data shown in the Table 2 below is the average of several chemical analyses at steady state conditions.

**Table 2**

| **Run** | **1** | **2** | **3** | **4** | **5** | **6** | **6** |
|---|---|---|---|---|---|---|---|
| %GBL | 100.00 | 100.00 | 100.00 | 100.00 | 100.00 | 100.00 | 100.00 |
| Pressure (psi) | 17.00 | 17.00 | 17.00 | 17.00 | 17.00 | 17.00 | 17.00 |
| Inlet T | 248.00 | 281.00 | 280.00 | 181.00 | 180.00 | 187.00 | 177.00 |
| Outlet T. | 139.00 | 147.00 | 194.00 | 203.00 | 120.00 | 112.00 | 119.00 |
| Lights | 1.26 | 0.33 | 0.07 | 0.08 | 0.06 | 0.38 | 0.56 |
| THF | 1.50 | 0.71 | 0.55 | 0.32 | 0.18 | 1.74 | 3.16 |
| 1-BuOH | 0.00 | 0.35 | 0.82 | 0.04 | 0.00 | 0.00 | 0.00 |
| GBL | 95.70 | 98.20 | 98.00 | 99.50 | 12.00 | 79.80 | 78.50 |
| BDO | 1.48 | 0.04 | 0.04 | 0.02 | 87.80 | 18.10 | 17.80 |
| Intermediates | 0.03 | 0.36 | 0.50 | 0.09 | 0.00 | 0.00 | 0.00 |
| Conversion | 98.52 | 99.96 | 99.96 | 99.98 | 12.20 | 81.90 | 82.20 |
| Selectivity | 97.14 | 98.24 | 98.04 | 99.52 | 98.36 | 97.44 | 95.50 |

Similar to the exotherm in the hydrogenation reaction, the endotherm of the dehydrogenation reaction is advantageously controlled to avoid the reaction extinguishes by cooling. Simulations indicate that when inlet temperatures are set below or much over the BDO condensation point, a dramatic decrease of temperature occurs, which can achieve a delta T higher than 300 °C. At inlet temperature closer to the BDO condensation point, a lower delta T was evidenced by both simulation and experimental data. This suggests that the reaction endotherm is regulated by heat generated due to GBL condensation produced inside the reactor. The lactone product removal from the vapor phase also favours the reaction equilibrium toward dehydrogenation.

The data highlights that high conversions were obtained for almost all set of conditions or reactor temperatures. However, a significant conversion drop was detected when the vaporizer temperature and the reactor were maintained below the GBL condensing point. This indicates that BDO dehydrogenation reaction mainly occurs in vapor phase. As dehydrogenation effectively proceeds in vapor phase, a significant amount of energy would be required to vaporize BDO before reaction. This heat can be partially recovered by condensing GBL and heat integration. The GBL condensation heat can also be released inside the reactor which would serve to regulate the reaction endotherm when the reactor operates in a certain temperature range. Therefore, a beneficial design parameter would be an adiabatic reactor operated at a feed temperature slightly over the GBL condensing point, such as 235-280 °C.

## Claims

1. Method (100) for handling dihydrogen, comprising :
- a step of providing a first organic compound (104) ; then
- a hydrogenation step (102), comprising submitting the first organic compound to a hydrogenation reaction in the presence of dihydrogen, so as to obtain a second organic compound (106) ; then
- a step (110) of conditioning the second organic compound for storage and/or transport; and storing and/or transporting the conditioned second organic compound ; then
- a dehydrogenation step (108), comprising submitting the second organic compound to a dehydrogenation reaction, so as to obtain dihydrogen and the first organic compound ;
the method being **characterized in that** the first organic compound is a lactone and **in that** the second organic compound is a terminal diol.

2. Method according to claim 1, wherein : the lactone is of general formula (I) : 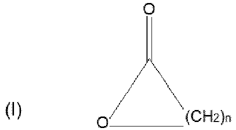
and the terminal diol is of general formula HO-(CH₂)ₙ₊₁-OH,
with n being a natural number comprised between 2 and 5.

3. Method according to claim 2, wherein the natural number n is selected among 2, 3, 4 and 5, the terminal diol being preferably the 1,4-butanediol.

4. Method according to any one of the previous claims, wherein the dehydrogenation step (108) is carried out in gaseous phase and the resulting lactone condenses during said dehydrogenation step.

5. Method according to any one of the previous claims, wherein the dehydrogenation step (108) is carried out in the presence of a Cu-based catalyst.

6. Method according to any one of the previous claims, wherein the hydrogenation step (102) is carried out in the presence of a Cu-based catalyst.

7. Method according to any one of the previous claims, wherein a fraction (84) of the second organic compound, obtained by the hydrogenation step, is reintroduced in a reactor (20) receiving said hydrogenation step.

8. Method according to any one of the previous claims, further comprising, after the dehydrogenation step (108), a step (112) of conditioning the first organic compound (104) for storage and/or transport ; and storing and/or transporting the conditioned first organic compound.

9. Industrial plant (10) configured for carrying out a method for handling dihydrogen according to one of the previous claims, the industrial plant comprising a hydrogenation unit (12) and a dehydrogenation unit (14),
the hydrogenation unit (12) comprising : a hydrogenation reactor (20) adapted for carrying out the hydrogenation step (102) ; and means (28) for conditioning the second organic compound (106) for storage and/or transport; and
the dehydrogenation unit (14) comprising a dehydrogenation reactor (50) adapted for carrying out the dehydrogenation step (106).

10. Industrial plant according to claim 9, wherein the hydrogenation unit (12) further comprises a first separator (22) downstream of the hydrogenation reactor (20), said first separator being preferably a liquid/gas separator.

11. Industrial plant according to claim 9 or 10, wherein the hydrogenation unit (12) further comprises a first treatment device (24) downstream of the hydrogenation reactor (20), said first treatment device being preferably a liquid/liquid separator.

12. Industrial plant according to one of claims 9 to 11, wherein the hydrogenation unit (12) further comprises a second treatment device (26) upstream of the hydrogenation reactor (20), said second treatment device being configured for removing acidic impurities from a stream (70) introduced in the hydrogenation reactor.

13. Industrial plant according to claim 12 combined with claim 7, wherein the hydrogenation unit (12) further comprises means for transferring the fraction (84) of the second organic compound, obtained by the hydrogenation step, from the hydrogenation reactor (20) to the second treatment device (26).

14. Industrial plant according to one of claims 9 to 13, wherein the dehydrogenation unit (14) further comprises a second separator (52) downstream of the dehydrogenation reactor (50), said second separator being preferably a liquid/gas separator.

15. Industrial plant (10) according to one of claims 9 to 14 combined with claim 8, wherein the dehydrogenation unit (14) further comprises means (54) for conditioning the first organic compound (104) for storage and/or transport.
